(19) **Europäisches Patentamt European Patent Office Office européen des brevets**

(11) **EP 3 222 854 B1**

(12) **EUROPEAN PATENT SPECIFICATION**

(45) Date of publication and mention of the grant of the patent:
**01.07.2020 Bulletin 2020/27**

(51) Int Cl.:
*F04D 17/02* (2006.01)    *F04D 19/02* (2006.01)

(21) Application number: **17156153.3**

(22) Date of filing: **14.02.2017**

(54) **AXI-CENTRIFUGAL COMPRESSOR**

**AXI-ZENTRIFUGALVERDICHTER**

**COMPRESSEUR AXI-CENTRIFUGE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2016 US 201615079538**

(43) Date of publication of application:
**27.09.2017 Bulletin 2017/39**

(73) Proprietor: **Honeywell International Inc.**
**Morris Plains, NJ 07950 (US)**

(72) Inventors:
• **NOLCHEFF, Nick**
  **Morris Plains, NJ New Jersey 07950 (US)**
• **REPP, John**
  **Morris Plains, NJ New Jersey 07950 (US)**
• **REYNOLDS, Bruce David**
  **Morris Plains, NJ New Jersey 07950 (US)**
• **HANSON, David Richard**
  **Morris Plains, NJ New Jersey 07950 (US)**

(74) Representative: **Houghton, Mark Phillip**
**Patent Outsourcing Limited**
**1 King Street**
**Bakewell, Derbyshire DE45 1DZ (GB)**

(56) References cited:
**WO-A1-2016/039918    US-A- 4 653 976**
**US-A1- 2014 003 928**

**Description**

TECHNICAL FIELD

The present disclosure generally relates to a gas turbine propulsion system, and more particularly relates to an axi-centrifugal compressor in which a proportioned distribution of the pressure rise across the axial and centrifugal compressor sections is achieved.

BACKGROUND

Gas turbine propulsion systems for aircraft must deliver high performance in a compact, lightweight configuration. This is particularly important in smaller jet propulsion systems typically used in regional and business aviation applications as well as in other turbofan, turboshaft, turboprop and rotorcraft applications. A well-known way to improve engine efficiency is to increase the overall pressure rise of the compressor. However, this is typically done by increasing the number of compressor stages, which increases the volume, weight, and cost of the engine; all of which reduce the value and competitive position of the engine. Larger commercial transport engines typically utilize "all-axial" high pressure compressors. Relative to the larger commercial transport engines, these relatively-smaller propulsion engines more frequently utilize "axi-centrifugal" compressors. Compressors of this type typically include one or more axial compressor stages followed by a centrifugal stage. The centrifugal compressor provides a second mechanism to increase overall pressure rise but often results in an increase of the diameter of the impeller in the centrifugal stage, resulting in increased weight and engine size.

Moreover, axial and centrifugal compressors have different optimal operating regimes, different physical characteristics, and different sensitivities to geometric and/or operational variation. As a result, conventional gas turbine propulsion systems pursue a very high level of aerodynamic loading in the centrifugal compressor section, relative to the axial compressor section, in an attempt to benefit from the centrifugal stabilizing effect and performance robustness. Unfortunately, this may require a relatively large and heavy centrifugal compressor section to achieve the overall pressure rise across the compressor.

Thus, there is a need for an axi-centrifugal compressor configuration, which strategically distributes the pressure rise between the axial and centrifugal compressor sections so that the compressor may deliver the overall pressure rise with fewer stages, lighter weight, and lower cost than previously available without compromising other critical performance characteristics of the engine such as compressor stability and durability. A compressor section of this type in a gas turbine propulsion system will meet the demands for a new level of performance for a smaller propulsion engine to robustly provide a high level of overall pressure rise with the highest efficiency and stability, while concurrently decreasing parts count, length, weight, and cost.

BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter. The present invention in its various aspects is as set out in the appended claims

The present disclosure provides an axi-centrifugal compressor configuration having a proportioned pressure ratio distribution across the compressor. In accordance with the present disclosure, a relatively high level of pressure rise is provided on the axial portion of the compressor, which leads to a reduction in the diameter and weight of the centrifugal stage compared to conventional compressor designs. A high level of pressure rise is also provided on each individual axial stage to minimize the stage count, which leads to a shorter length, lighter weight, lower cost, and high performance compared to conventional compressor designs. Aerodynamic over-loading of the axial stages that would otherwise result in boundary layer separations, low efficiency, and poor compressor operability is minimized.

An axi-centrifugal compressor is provided in a gas turbine propulsion system typically used in regional and business aviation applications as well as in other turbofan, turboshaft, turboprop and rotorcraft applications (e.g., less than 15 klbf Sea Level Take Off Thrust). The compressor is rotatably supported on a shaft assembly in a housing and operable to affect a pressure ratio along a flow path between a compressor inlet and a compressor exit. An axial compressor section having one or more axial stages is operable to affect a first exit. The first section exit associated with the axial compressor section is in fluid communication with the second section inlet associated with the centrifugal section along the flow path. The compressor has a tuning factor defined as $PR_{ax}/PR_c$ in the range between 2.8 and 4.5 and a loading factor defined as $(PR_{ax})^{1/n}/PR_c$ in the range between 0.6 and 0.8, where n is the number of stages in the axial compressor section.

A method is also provided for compressing a fluid along a flow path in a gas turbine propulsion system typically used in regional and business aviation applications as well as in other turbofan, turboshaft, turboprop and rotorcraft applications (e.g., less than 15 klbf Sea Level Take Off Thrust). The fluid is drawn in at a first inlet pressure along the flow path through a first inlet. The fluid is compressed along the flow path in an axial compressor section having one or more axial stages downstream from the first inlet to a first exit in the axial compressor section at a first outlet pressure. A first pressure ratio ($PR_{ax}$) is affected across the axial compressor section. The fluid is communicated from the first exit into a second inlet along the flow path at a first outlet pressure. The fluid is compressed along the flow path in a centrifugal compressor section from the second inlet to a second exit. A second pressure ratio is affected across the centrifugal compressor section. The pressure rise through the compressor is distributed between the axial and centrifugal compressor sections such that a tuning factor defined as $PR_{ax}/PR_c$ is in the range between 2.8 and 4.5 and a loading factor defined as $(PR_{ax})^{1/n}/PR_c$ is in the range between 0.6 and 0.8, where n is the number of stages in the axial compressor section.

Furthermore, other desirable features and characteristics of the apparatus and method will become apparent from the subsequent detailed description and the appended claims, taken in conjunction with the accompanying drawings and the preceding background.

BRIEF DESCRIPTION OF THE DRAWINGS

The present disclosure will hereinafter be described in conjunction with the following drawing figures, wherein like numerals denote like elements, and wherein:

FIG. 1 is a simplified cross-sectional side view of a gas turbine engine according to an exemplary embodiment; and
FIG. 2 is a partial cross-sectional view of an axi-centrifugal compressor rotatably supported on a shaft assembly suitable for use with the engine of FIG. 1 in accordance with an exemplary embodiment.

DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Broadly, exemplary embodiments discussed herein include an axi-centrifugal compressor configuration having an proportioned pressure ratio distribution across the compressor. A relatively high pressure rise is provided on the axial portion of the compressor and across each stage in the axial compressor section. In addition, the aerodynamic over-loading in each axial stage is minimized. In this way, a proportioned pressure rise can be achieved in a small, light-weight and cost-effective manner.

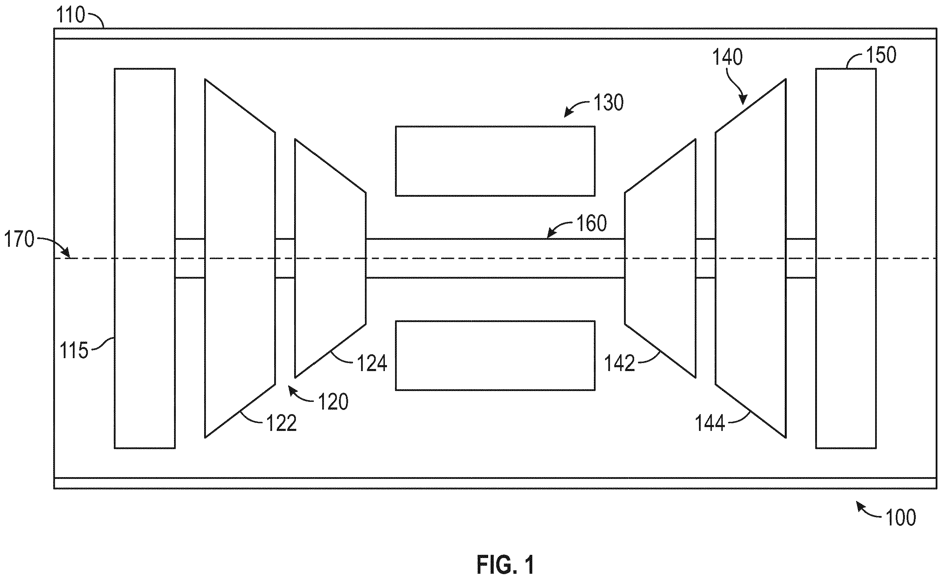

Reference now is made to the drawings in which FIG. 1 shows a simplified, cross-sectional view of a gas turbine engine 100 according to an embodiment. The engine 100 may be disposed in an engine housing 110 and may include an intake section 115, a compressor section 120, a combustion section 130, a turbine section 140, and an exhaust section 150. The compressor section 120, turbine section 140 and exhaust section 150 are operably coupled to a shaft assembly 160 for rotation within the housing 110. A fluid is drawn into the engine housing 110 through the intake section 115 and into the compressor section 120. The compressor section 120 includes an axial compressor 122 which may include one or more axial stages and a centrifugal compressor 124 that increases the pressure of the fluid entering the engine 100. Compression of the fluid may also result in heating of the fluid through the compressor section 120. The compressor section 120 is in fluid communication with the combustion section 130 and directs the compressed fluid into a combustion chamber where the compressed fluid is mixed with fuel and combusted in the combustion chamber. Hot exhaust fluids are then directed into the turbine section 140. The hot exhaust fluids expand through and rotate the turbine section 140 prior to being exhausted through the exhaust section 150 of the engine 100.

The turbine section 140 rotates to drive equipment in the engine 100 via rotors or spools concentrically disposed about an axis of rotation 170 within the shaft assembly 160. Specifically, the turbine section 140 may include one or more rotors 142, 144 driven by the expanding exhaust fluids to rotate to the shaft assembly 160 and drive the compressor section 120 including the axial compressor section 122 and the centrifugal compressor section 124. While FIG. 1 depicts an exemplary configuration having an axi-centrifugal compressor core in a turboshaft engine, other embodiments may have alternate configurations. Thus, the exemplary embodiments discussed herein are not intended to be limited to a turboshaft engine, but rather may be readily adapted for use in other types of turbine engines including but not limited to turbofan and turboprop engines.

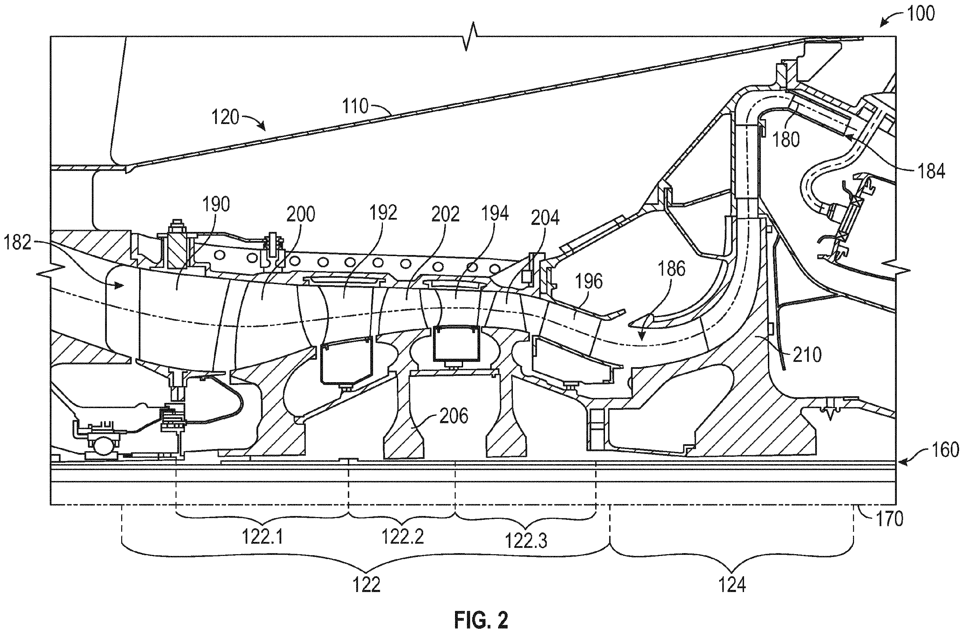

FIG. 2 is a more detailed partial cross-sectional view of the compressor section 120 and a portion of the shaft assembly 160 of the engine 100 shown in FIG. 1 in accordance with an exemplary embodiment. In FIG. 2, only half the cross-sectional view of the compressor section 120 is shown; the other half would be substantially rotationally symmetric about a centerline and axis of rotation 170. Additionally, certain aspects of the engine 100 may not be shown in FIG. 2, or only schematically shown, for clarity in the relevant description of exemplary embodiments. The compressor section 120 defines a meanline flow path 180 (indicated by the long dash - short dash - short dash line) from a compressor inlet 182 through the axial compressor section 122 and the centrifugal compressor section 124 to a compressor exit 184, which is in fluid communication with the combustion section 130 (not shown in FIG. 2). As shown in FIG. 2, the axial compressor section 122 leads into the centrifugal compressor section 124 such that an exit 186 of the axial compressor section 122 is in fluid communication with an inlet 186 of the centrifugal compressor 124. One skilled in the art will understand that Fig. 2 illustrates a simplified cross-section through the compressor section 120, and that other features may be included in the compressor section 120 along the flow path 180 as dictated by the specification and constraints associated with a particular intended use.

The axial compressor section 122 progressively compresses fluids flowing generally axially (i.e., parallel to axis 170) along the flow path 180. The axial compressor section 122 includes one or more axial compressor stages 122.1, 122.2, 122.3. As shown in FIG. 2, the axial compressor section 122 includes one or more stator assemblies 190, 192, 194, 196 and one or more blade assemblies 200, 202, 204. The stator assemblies 190, 192, 194, 196 may include a plurality of stator vanes arranged in one or more vane rows which are stationary with respect to the engine housing 110 and function to diffuse and direct the fluid through the flow path 180. The rotor assemblies 200, 202, 204 may include a plurality of rotor blades extending from a rotor hub 206 into the flow path 180 and configured in one or more blade rows which are rotatably driven on the shaft assembly 160. As the rotor assemblies 200, 202, 204 rotate, the fluid flowing across each blade row are incrementally compressed along the flow path 180. One skilled in the art will understand that the present disclosure is not limited to the specific number and arrangement of stator and rotor assemblies illustrated in Fig. 2, and that other configurations for the axial compressor section 122 are contemplated within the scope of the subject matter described and claimed herein. Modifications may include but are not limited to the use of multiple stators or double row stators within a given axial compressor stage, variable stator vanes, or struts.

The centrifugal compressor section 124 compresses the fluid and directs the flow radially outward (i.e., in a direction which increases in a radial direction away from the axis 170) through an impeller assembly 210 driven on the shaft assembly 160. The rotor assemblies 200, 202, 204 and the impeller assembly 210 shown in FIG. 2 are coupled to a common drive shaft for co-rotation. However, one skilled in the art will understand that other drive shaft configurations may be used for operantly coupling the axial compressor section 122 and the centrifugal compressor section 124 at a various drive ratio. For example, one or more of the rotor assemblies 200, 202, 204 may be coupled for co-rotation, while the remaining rotor assemblies 200, 202, 204 and the impeller assembly 210 are not coupled for co-rotation. Alternatively, one or more of the rotor assemblies 200, 202, 204 and the impeller assembly 210 may be coupled for co-rotation. Alternatively, the shaft assembly 160 may include counter rotating shafts for the axial compressor section 124 and the centrifugal compressor assembly 126, or for the various axial compressor stages 122.1, 122.2, 122.3.

As indicated above, the axial compressor section 122 includes a first stage 122.1 immediately downstream of the compressor inlet 182, a second stage 122.2 downstream of the first stage 122.1, and a third stage 122.3 downstream of the second stage 122.2. Each of the axial compressor stages 122.1, 122.2, 122.3 contributes to a pressure rise from the compressor inlet 182 to the axial compressor exit 186. The performance of the axial compressor section 122 can be characterized according to a first pressure rise ($TPR_A$) and a first pressure ratio ($PR_{ax}$) across the axial compressor section 122, as well as the pressure ratio per axial stage 122.1, 122.2, 122.3 (PR/stage ax) as provided below:

$$TPR_A = PE_1 - PI_1$$

$$PR_{ax} = PE_1/PI_1$$

$$PR/stage\ ax = (PE_1/PI_1)^{1/n}$$

wherein:

$PI_1$ is the pressure at the compressor inlet 182;
$PE_1$ is the pressure at the axial compressor exit 186; and
$n$ is the number of axial stages.

Likewise, the performance of the centrifugal compressor section 124 can be characterized according to a second pressure rise ($TPR_c$) and a second pressure ratio ($PR_c$) across the centrifugal compressor section 124 as provided below:

$$TPR_c = PE_2 - PI_2$$

$$PR_c = PE_2/PI_2$$

wherein:

$PI_2$ is the pressure at the centrifugal compressor inlet 186; and
$PE_2$ is the pressure at the centrifugal exit 184.

As noted above, operation of the compressor section 120, and particularly the contribution of the axial compressor section 122 and the centrifugal compressor section 124 are proportioned, while the aerodynamic over-loading of the axial stages 122.1, 122.2, 122.3 is minimized. Specifically, the compressor 120 has a tuning factor which satisfies the following condition:

$$2.8 < \frac{PR_{ax}}{PR_c} = \frac{PE_1/PI_1}{PE_2/PI_2} < 4.5$$

and a loading factor which satisfies the following condition:

$$0.6 < \frac{PR/stage\ ax}{P_{Rc}} = \frac{(PE_1/PI_1)^{1/n}}{PE_2/PI_2} < 0.8$$

While a tuning factor in the range between 2.8 and 4.5 provides advantages described herein, additional advantages may be gained for a tuning factor in the range between 3.5 and 4.0. Likewise, while a loading factor in the range between 0.6 and 0.8 provide advantages described herein, additional advantages may be gained for a loading factor in the range between 0.65 and 0.75.

To satisfy these conditions, a proportioned distribution of pressure rise across the axial stage compressor 122 and the centrifugal compressor 124, as well as across axial stage 122.1, 122.2, 122.3 (i.e., stage matching) must be achieved. Moreover, the spanwise gradient of pressure rise across each axial stage should be configured to maximize the overall pressure rise attained. While a basic axial compressor section 122 has been illustrated and described herein, one skilled in the art will understand that additional compressor elements may be included to ensure that the axi-centrifugal compressor 120 satisfies the tuning and loading factors over the range of expected operating conditions. For example, the use of stability enhancing devices such as rotor tip casing treatments; variable stagger inlet guide vanes and stators; boundary layer separation control devices such as fluidic actuators (suction and blowing), vortex generators and plasma actuators placed on the end walls and/or airfoils to control destabilizing boundary layer separations; and airflow bleed (in or out) may be used to modify the stage matching at different operating conditions.

A compressor section 120 satisfying both of these conditions effectively distributes the pressure rise among the axial compressor stage 122 and the centrifugal compressor section 124 so that the compressor section 120 may achieve the desired overall pressure rise with fewer stages, lighter weight and lower cost as compared to conventional compressor sections. In particular, a compressor section 120 with a tuning factor within a range between 2.8 and 4.5 and a loading factor within a range between 0.6 and 0.8 achieves a relatively high pressure rise across the axial compressor section by providing a high level of pressure rise on each individual axial stage, while avoiding detrimental aerodynamic over-loading of any axial stage. The result is a compact and efficient compressor section in which the axial compressor section is shorter, lighter, lower cost and higher performance, and the centrifugal compressor section is smaller in diameter and lower in weight.

Unless otherwise explicitly indicated, the term "pressure" as used herein is intended to mean a total pressure at a given location, for example the total pressure at an inlet or exit of either the axial compressor section or the centrifugal compressor section. "Total pressure" refers to the sum of static pressure and dynamic pressure as expressed by Bernoulli's principle. Any contribution attributable to gravitational head may also be included in the "total pressure." Accordingly, the terms "pressure rise" and "pressure ratio" are also considered in terms of total pressures, unless explicitly indicated otherwise.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the context in which it is used.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

It should be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention as set out in the appended claims. It being understood that various changes may be made in the function and arrangement of elements described in an exemplary embodiment without departing from the scope of the invention as set forth in the appended claims.

## Claims

1. An axi-centrifugal compressor for a gas turbine propulsion system (100) for an aircraft comprising:

   a housing (110); and
   a compressor (120) rotatably supported on a shaft assembly (160) in the housing and operable to effect a pressure ratio along a flow path (180) between a compressor inlet (182) and a compressor exit (184); wherein the compressor includes:

   an axial compressor section (122) having at least one axial stage operable to effect a first pressure ratio along the flow path between the compressor inlet and a first section exit (186);
   a centrifugal compressor section (124) operable to effect a second pressure ratio along the flow path between a second section inlet (186) and the compressor exit, wherein the first section exit associated with the axial compressor section leads directly into the second section inlet associated with the centrifugal section along the flow path;
   wherein the compressor has a tuning factor satisfying the following condition over the range of expected operating conditions:

$$2.8 < PR_{ax}/PR_c < 4.5$$

   where:

   $PR_{ax}$ is the first pressure ratio, and
   $PR_c$ is the second pressure ratio;

   and a loading factor satisfying the following condition over the range of expected operating conditions:

$$0.6 < (PR_{ax})^{\frac{1}{n}}/(PR_c) < 0.8$$

   where:
   $n$ is the number of axial stages in the axial compressor section,
   and wherein:

   the axial compressor section comprises a plurality of axial stages (122.1; 122.2; 122.3) in the axial compressor section;
   each of the plurality of axial stages comprises at least one stator assembly (190; 192; 194; 196) and a rotor assembly (200; 202; 204) operably coupled to the shaft assembly for rotation relative to the stator assembly; the plurality of rotor assemblies are coupled for co-rotation on the shaft assembly; the shaft assembly operably couples the axial compressor section and the centrifugal compressor section for co-rotation thereon; and the plurality of axial stages are coupled for co-rotation with the centrifugal compressor section.

2. The axi-centrifugal compressor according to claim 1 wherein the tuning factor is in a range between 3.5 and 4.0 or the loading factor is in a range between 0.65 and 0.75.

3. A method for operating a compressor along a flow path (180) in a gas turbine propulsion system (100) for an aircraft comprising:

drawing a fluid along the flow path through a first inlet (182);
compressing the fluid along the flow path in an axial compressor (122) section having a least one axial stage downstream from the first inlet (182) to a first exit (186) in the axial compressor section such that:

$$PR_{ax} = PE_1/PI_1$$

$$PR/stage\ ax = (PE_1/PI_1)^{1/n}$$

where:

$PI_1$ is the pressure at the first inlet,
$PE_1$ is the pressure at the first exit, and
$n$ is the number of axial stages;

communicating the fluid from the first exit into a second inlet (186) along the flow path;
compressing the fluid along the flow path in a centrifugal compressor downstream from the second inlet to a second outlet (184) of the centrifugal compressor section such that:

$$PR_c = PE_2/PI_2$$

where:

$PI_2$ is the pressure at the second inlet, and
$PE_2$ is the pressure at the second exit;
wherein the fluid is compressed according to the following conditions over the range of expected operating conditions:

$$2.8 < PR_{ax}/PR_c < 4.5$$

$$0.6 < (PR/stage\ ax)/(PR_c) < 0.8,$$

and wherein:

the fluid is compressed in a plurality of axial stages (122.1; 122.2; 122.3) along the flow path in the axial compressor section;
the plurality of axial stages are co-rotated on a shaft assembly (160);
the axial compressor and the centrifugal compressor sections are co-rotated on the shaft assembly; and
the plurality of axial stages are co-rotated with the centrifugal compressor section.

4. The method according to claim 3 wherein the fluid is compressed according to at least one of the following conditions:

$$3.5 \; < \; PR_{ax}/PR_c \; < 4.0$$

$$0.65 < (PR/stage\ ax)/(PR_c) \; < \; 0.75.$$

**Patentansprüche**

1. Axi-Zentrifugalverdichter für ein Gasturbinenantriebssystem (100) für ein Flugzeug, umfassend:

ein Gehäuse (110); und
einen Verdichter (120), der drehbar auf einer Wellenanordnung (160) in dem Gehäuse gelagert ist und betreibbar ist, um ein Druckverhältnis entlang eines Strömungswegs (180) zwischen einem Verdichtereinlass (182) und einem Verdichterausgang (184) zu bewirken; wobei der Verdichter Folgendes umfasst:

einen Axialverdichterabschnitt (122) mit mindestens einer axialen Stufe, die betreibbar ist, um ein erstes Druckverhältnis entlang des Strömungswegs zwischen dem Verdichtereinlass und einem ersten Abschnittausgang (186) zu bewirken;
einen Zentrifugalverdichterabschnitt (124), der betreibbar ist, um ein zweites Druckverhältnis entlang des Strömungswegs zwischen einem zweiten Abschnitteinlass (186) und dem Verdichterausgang zu bewirken, wobei der dem Axialverdichterabschnitt zugeordnete erste Abschnittausgang direkt in den dem Zentrifugalabschnitt zugeordneten zweiten Abschnitteinlass entlang des Strömungswegs führt;
wobei der Verdichter einen Abstimmfaktor aufweist, der die folgende Bedingung über den Bereich von erwarteten Betriebsbedingungen erfüllt:

$$2,8 < PR_{ax}/PR_c < 4,5$$

wobei:

$PR_{ax}$ das erste Druckverhältnis ist und
$PR_c$ das zweite Druckverhältnis ist;

und einen Belastungsfaktor aufweist, der die folgende Bedingung über den Bereich von erwarteten Betriebsbedingungen erfüllt:

$$0,6 < (PR_{ax})^{\frac{1}{n}}/(PR_c) < 0,8$$

wobei:
$n$ die Anzahl der axialen Stufen im Axialverdichterabschnitt ist,
und wobei:

der Axialverdichterabschnitt mehrere axiale Stufen (122.1; 122.2; 122.3) in dem Axialverdichterabschnitt umfasst;
jede der mehreren axialen Stufen mindestens eine Statoranordnung (190; 192; 194; 196) und eine Rotoranordnung (200; 202; 204) umfasst, die betriebsmäßig mit der Wellenanordnung zur Drehung relativ zu der Statoranordnung gekoppelt ist;
die mehreren Rotoranordnungen zur gemeinsamen Drehung an der Wellenanordnung gekoppelt sind;
die Wellenanordnung den Axialverdichterabschnitt und den Zentrifugalverdichterabschnitt betriebsmäßig zur gemeinsamen Drehung darauf koppelt; und
die mehreren axialen Stufen zur gemeinsamen Drehung mit dem Zentrifugalverdichterabschnitt gekoppelt sind.

2. Axi-Zentrifugalverdichter nach Anspruch 1, wobei der Abstimmfaktor in einem Bereich zwischen 3,5 und 4,0 liegt oder der Belastungsfaktor in einem Bereich zwischen 0,65 und 0,75 liegt.

3. Verfahren zum Betreiben eines Verdichters entlang eines Strömungswegs (180) in einem Gasturbinenantriebssystem (100) für ein Flugzeug, umfassend:

Ansaugen eines Fluids entlang des Strömungswegs durch einen ersten Einlass (182);
Verdichten des Fluids entlang des Strömungswegs in einem Axialverdichterabschnitt (122) mit mindestens einer axialen Stufe nachgelagert von dem ersten Einlass (182) zu einem ersten Ausgang (186) in dem Axialverdichterabschnitt, sodass:

$$PR_{ax} = PE_1/PI_1$$

$$PR/Stufe\,ax = (PE_1/PI_1)^{1/n}$$

wobei:

$PI_1$ der Druck an dem ersten Einlass ist,
$PE_1$ der Druck an dem ersten Ausgang ist und
$n$ die Anzahl der axialen Stufen ist;

Übertragen des Fluids von dem ersten Ausgang in einen zweiten Einlass (186) entlang des Strömungswegs;
Verdichten des Fluids entlang des Strömungswegs in einem Zentrifugalverdichter nachgelagert von dem zweiten Einlass zu einem zweiten Auslass (184) des Zentrifugalverdichterabschnitts, sodass:

$$PR_c = PE_2/PI_2$$

wobei:

$PI_2$ der Druck an dem zweiten Einlass ist und
$PE_2$ der Druck an dem zweiten Ausgang ist;
wobei das Fluid gemäß den folgenden Bedingungen über den Bereich von erwarteten Betriebsbedingungen verdichtet wird:

$$2,8 < PR_{ax}/PR_c < 4,5$$

$$0,6 < (PR/Stufe\,ax)/(PR_c) < 0,8,$$

und wobei:

das Fluid in mehreren axialen Stufen (122.1; 122.2; 122.3) entlang des Strömungswegs in dem Axialverdichterabschnitt verdichtet wird;
die mehreren axialen Stufen auf einer Wellenanordnung (160) gemeinsam gedreht werden;
der Axialverdichter und die Zentrifugalverdichterabschnitte auf der Wellenanordnung gemeinsam gedreht werden; und
die mehreren axialen Stufen mit dem Zentrifugalverdichterabschnitt gemeinsam gedreht werden.

4. Verfahren nach Anspruch 3, wobei das Fluid gemäß mindestens einer der folgenden Bedingungen verdichtet wird:

$$3,5 < PR_{ax}/PR_c < 4,0$$

$$0,65 < (PR/Stufe\,ax)/(PR_c) < 0,75.$$

**Revendications**

1. Compresseur axi-centrifuge destiné à un système de propulsion de turbine à gaz (100) pour un aéronef comprenant :

   un boîtier (110) ; et
   un compresseur (120) supporté en rotation sur un ensemble arbre (160) dans le boîtier et pouvant fonctionner pour appliquer un rapport de pression le long d'une voie d'écoulement (180) entre une entrée de compresseur (182) et une sortie de compresseur (184) ; le compresseur comprenant :

   une section de compresseur axial (122) comportant au moins un étage axial pouvant fonctionner pour appliquer un premier rapport de pression le long de la voie d'écoulement entre l'entrée du compresseur et une première sortie de section (186) ;
   une section de compresseur centrifuge (124) pouvant fonctionner pour appliquer un second rapport de pression le long de la voie d'écoulement entre une seconde entrée de section (186) et la sortie de compresseur, la première sortie de section associée à la section de compresseur axial menant directement dans la seconde entrée de section associée avec la section centrifuge le long de la voie d'écoulement ;
   dans lequel le compresseur a un facteur de réglage vérifiant la condition suivante sur la plage de conditions attendues de fonctionnement :

$$2,8 < PR_{ax}/PR_c < 4,5$$

   où :

   $PR_{ax}$ représente le premier rapport de pression et
   $PR_c$ représente le second rapport de pression ;

   et un facteur de charge vérifiant la condition suivante sur la plage de conditions attendues de fonctionnement :

$$0,6 < (PR_{ax})^{\frac{1}{n}}/(PR_c) < 0,8$$

   où :
   $n$ représente le nombre d'étages axiaux dans la section de compresseur axial
   et dans lequel :

   la section de compresseur axial comprend une pluralité d'étages axiaux (122.1 ; 122.2 ; 122.3) dans la section de compresseur axial ;
   chacun de la pluralité d'étages axiaux comprend au moins un ensemble stator (190 ; 192 ; 194 ; 196) et un ensemble rotor (200 ; 202 ; 204) accouplés de manière fonctionnelle à l'ensemble arbre pour pouvoir tourner par rapport à l'ensemble stator ;
   la pluralité d'ensembles rotor est accouplée pour permettre une co-rotation sur l'ensemble arbre ;
   l'ensemble arbre couple de manière fonctionnelle la section de compresseur axial et la section de compresseur centrifuge pour permettre une co-rotation sur celui-ci ; et
   la pluralité d'étages axiaux sont accouplés pour permettre une co-rotation avec la section de compresseur centrifuge.

2. Compresseur axi-centrifuge selon la revendication 1, dans lequel le facteur de réglage est dans une plage entre 3,5 et 4,0 ou le facteur de charge est dans une plage entre 0,65 et 0,75.

3. Procédé d'actionnement d'un compresseur le long d'une voie d'écoulement (180) dans un système de propulsion de turbine à gaz (100) pour un aéronef, comprenant :

   l'aspiration d'un fluide le long de la voie d'écoulement à travers une première entrée (182) ;
   la compression du fluide le long de la voie d'écoulement dans une section de compresseur axial (122) comportant au moins un étage axial en aval de la première entrée (182) jusqu'à une première sortie (186) dans la section de compresseur axial, de sorte que :

$$PR_{ax} = PE_1/PI_1$$

$$PR/\text{Étage } ax = (PE_1/PI_1)^{1/n}$$

où :

$PI_1$ représente la pression à la première entrée,
$PE_1$ représente la pression à la première sortie et
$n$ représente le nombre d'étages axiaux ;

la communication du fluide de la première sortie dans une seconde entrée (186) le long de la voie d'écoulement ;
la compression du fluide le long de la voie d'écoulement dans un compresseur centrifuge en aval de la seconde entrée vers une seconde sortie (184) de la section de compresseur centrifuge de sorte que :

$$PR_c = PE_2/PI_2$$

où :

$PI_2$ représente la pression à la seconde entrée et
$PE_2$ représente la pression à la seconde sortie ;
le fluide étant comprimé selon les conditions suivantes sur la plage de conditions attendues de fonctionnement :

$$2,8 < PR_{ax}/PR_c < 4,5$$

$$0,6 < (PR/\text{Étage } ax)/(PR_c) < 0,8,$$

et où :

le fluide est comprimé dans une pluralité d'étages axiaux (122.1 ; 122.2 ; 122.3) le long de la voie d'écoulement dans la section de compresseur axial ;
la pluralité d'étages axiaux sont mis en co-rotation sur un ensemble arbre (160) ;
le compresseur axial et les sections de compresseur centrifuge sont mis en co-rotation sur l'ensemble arbre ; et
la pluralité d'étages axiaux sont mis en co-rotation avec la section de compresseur centrifuge.

4. Procédé selon la revendication 3, dans lequel le fluide est comprimé selon au moins l'une des conditions suivantes :

$$3,5 < PR_{ax}/PR_c < 4,0$$

$$0,65 < (PR/\text{Étage } ax)/(PR_c) < 0,75.$$

FIG. 1

FIG. 2

EP 3 222 854 B1